# EUROPEAN PATENT APPLICATION

(11) **EP 4 757 136 A1**
(43) Date of publication of application: **10.06.2026**
(21) Application number: 24848747.2
(22) Date of filing: 26.06.2024
(51) Int. Cl.: H02K 5/24, F16F 15/08

(54) **VIBRATION ISOLATOR AND MOTOR HAVING VIBRATION ISOLATOR**

(30) Priority: 02.08.2023 JP 2023125959
(71) Applicant: Panasonic Intellectual Property Management Co., Ltd., Kadoma-shi, Osaka 571-0057 (JP)
(72) Inventor: AMAYA, Takanori, Kadoma-shi, Osaka 571-0057 (JP); NANBU, Yasuo, Kadoma-shi, Osaka 571-0057 (JP)
(74) Representative: SSM Sandmair
(86) International application number: PCT/JP2024/023079
(87) International publication number: WO 2025/028087

(57) **Abstract**

A vibration isolator includes an elastic body that is ring-shaped, and a metal ring that covers an outer peripheral surface of the elastic body, in which: the metal ring has a divided portion where a part in a circumferential direction of the metal ring is divided; the elastic body has a depressed portion where an outer peripheral surface is depressed in the divided portion; a first end that is one end in the circumferential direction of the metal ring is bent and a tip is located inside the depressed portion.

## Description

### TECHNICAL FIELD

The present disclosure relates to a vibration isolator and a motor having the vibration isolator.

### BACKGROUND ART

Motors are used in various kinds of equipment, including household electrical appliances such as air conditioners and washing machines. For example, a motor is used as a fan motor mounted on an indoor unit or an outdoor unit of an air conditioner. A fan, such as a sirocco fan or a cross-flow fan, is attached to the tip portion of a rotating shaft protruding to both sides or one side of a motor mounted on an indoor unit or an outdoor unit of an air conditioner.

The motor is attached to the pedestal of the equipment via a ring-shaped vibration isolator such that vibration caused by the motor is not transmitted to the outside (see PTL 1). Consequently, the vibration from the motor can be prevented from being transmitted to the pedestal. Therefore, noise reduction in the equipment can be achieved.

The ring-shaped vibration isolator includes a thin cylindrical elastic body and a metal ring made of an annular metal plate surrounding the elastic body. The vibration isolator is attached to, for example, a bracket of a motor body having a rotor and a stator. The motor having the vibration isolator is fixed to the pedestal by setting the vibration isolator in a motor reception portion of the pedestal and tightening the vibration isolator by a tightening member.

However, when the motor is fixed to the pedestal, the vibration isolator may be excessively tightened by the tightening member. That is, a tightening force applied by the tightening member may become so high that the vibration isolator is tightened into a state where tightening would otherwise be unnecessary.

### Citation List

### Patent Literature

PTL 1: Unexamined Japanese Patent Publication No. 2018-93564

### SUMMARY OF THE INVENTION

The present disclosure has been made to solve such problems. An object of the present disclosure is to provide a vibration isolator capable of suppressing excessive reception of a tightening force, and a motor having the vibration isolator.

In order to achieve the above object, a vibration isolator according to an aspect of the present disclosure includes: an elastic body that is ring-shaped; and a metal ring that covers an outer peripheral surface of the elastic body, in which: the metal ring has a divided portion where a part in a circumferential direction of the metal ring is divided; the elastic body has a depressed portion where the outer peripheral surface is depressed in the divided portion; and a first end that is one end in the circumferential direction of the metal ring is bent and a tip is located inside the depressed portion.

A vibration isolator according to another aspect of the present disclosure includes: an elastic body that is ring-shaped; and a metal ring that covers an outer peripheral surface of the elastic body, in which the vibration isolator has a structure that, when the elastic body is tightened by the metal ring, differentiates tightening forces that the elastic body receives at two positions in a circumferential direction.

A motor according to another aspect of the present disclosure includes: the vibration isolator according to any one of the above aspects; a rotor having a rotating shaft; and a bracket having a protrusion where a bearing that supports the rotating shaft is housed, in which the vibration isolator is fitted into the protrusion.

According to the present disclosure, it is possible to realize a vibration isolator capable of suppressing excessive reception of a tightening force and a motor having the vibration isolator.

### BRIEF DESCRIPTION OF THE DRAWINGS

Fig. 1 is a side view of a motor according to an exemplary embodiment.
Fig. 2 is a side view illustrating a state where, in the motor according to the exemplary embodiment, a motor body and a vibration isolator are separated.
Fig. 3A is a perspective view of the vibration isolator according to the exemplary embodiment.
Fig. 3B is a perspective view of another vibration isolator according to the exemplary embodiment.
Fig. 4A is a view illustrating a configuration of the vibration isolator according to the exemplary embodiment.
Fig. 4B is a view illustrating a configuration of another vibration isolator according to the exemplary embodiment.
Fig. 5A is a cross-sectional view of the vibration isolator taken along line V-V in (c) of Fig. 4A.
Fig. 5B is a cross-sectional view of another vibration isolator according to the exemplary embodiment.
Fig. 6 is a side view of the motor fixed to a pedestal.
Fig. 7 is a perspective view of the motor fixed to the pedestal.
Fig. 8 is a perspective view of the motor illustrating a state where a tightening member is removed from the pedestal.
Fig. 9 is a view for explaining a state where a motor body is fixed to a pedestal using a vibration isolator of a comparative example.
Fig. 10 is a side view of a vibration isolator according to Modification 1.
Fig. 11 is an enlarged cross-sectional view of the vibration isolator according to the exemplary embodiment.
Fig. 12 is an enlarged cross-sectional view of a vibration isolator according to Modification 2.
Fig. 13 is an enlarged cross-sectional view of a vibration isolator according to Modification 3.
Fig. 14 is a side view of a vibration isolator according to Modification 4.
Fig. 15 is a side view of a vibration isolator according to Modification 5.
Fig. 16 is a side view of a vibration isolator according to Modification 6.

### DESCRIPTION OF EMBODIMENT

Hereinafter, exemplary embodiments of the present disclosure will be described with reference to the drawings. Each of the exemplary embodiments described below illustrates a specific example of the present disclosure. The numerical values, shapes, materials, constituent elements, arrangement positions and connection modes of the constituent elements, and the like illustrated in the following exemplary embodiments are each merely one example, and they are not intended to limit the present disclosure. Thus, among the constituent elements in the following exemplary embodiments, constituent elements that are not described in independent claims indicating the highest concept of the present disclosure are described as optional constituent elements.

Each of the drawings is a schematic view and is not necessarily strictly illustrated. In each drawing, substantially the same configurations as those in other drawings are denoted by the same reference marks, and redundant description will be omitted or simplified. In the present specification, the terms "upper" and "lower" do not necessarily refer to an upward direction (vertically upward) and a downward direction (vertically downward) in absolute space recognition.

### (Exemplary embodiment)

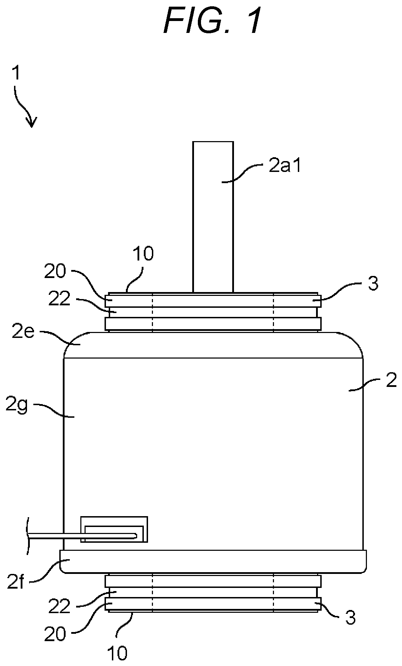

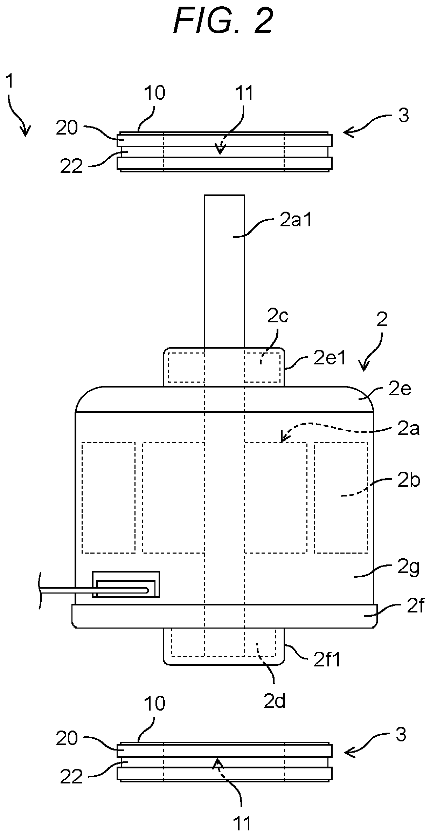

A configuration of motor 1 according to an exemplary embodiment will be described with reference to Figs. 1 and 2. Fig. 1 is a side view of motor 1 according to the exemplary embodiment. Fig. 2 is a side view illustrating a state where, in motor 1 according to the exemplary embodiment, motor body 2 and vibration isolator 3 are separated.

As illustrated in Figs. 1 and 2, motor 1 includes motor body 2 and vibration isolator 3 attached to motor body 2. In the present exemplary embodiment, two vibration isolators 3 are attached to motor body 2.

Motor body 2 includes rotor 2a, stator 2b, first bearing 2c and second bearing 2d, first bracket 2e, and second bracket 2f. Rotor 2a has rotating shaft 2a1 that is a shaft made of metal. Stator 2b generates a magnetic force for rotating rotor 2a. First bearing 2c and second bearing 2d rotatably support rotating shaft 2a1. First bracket 2e holds first bearing 2c. Second bracket 2f holds second bearing 2d.

As an example, motor body 2 is a brushless motor that does not use a brush. Motor body 2 is an inner rotor type motor having rotor 2a disposed inside stator 2b.

Motor body 2 is a molded motor. Motor body 2 includes molding resin 2g that covers stator 2b. In motor body 2, first bracket 2e, second bracket 2f, and molding resin 2g constitute an outer shell of motor body 2. First bracket 2e and second bracket 2f are fixed to molding resin 2g.

First bracket 2e and second bracket 2f include a metal material. Specifically, first bracket 2e and second bracket 2f include a metal plate. First bracket 2e and second bracket 2f are formed in predetermined shapes by performing press working or the like on the metal plate.

First bracket 2e has protrusion 2e1 protruding outward. Specifically, protrusion 2e1 is formed in a circular convex shape so as to protrude to one side along the axis centerline of rotating shaft 2a1. First bearing 2c is housed in protrusion 2e1 and fixed to protrusion 2e1.

Second bracket 2f has protrusion 2f1 protruding outward. Specifically, protrusion 2f1 is formed in a circular convex shape so as to protrude to the other side along the axis centerline of rotating shaft 2a1. Second bearing 2d is housed in protrusion 2f1 and fixed to protrusion 2f1.

Two vibration isolators 3 are attached to both sides of motor body 2 along the axis centerline of rotating shaft 2a1. That is, two vibration isolators 3 are attached to motor body 2 so as to sandwich motor body 2.

One of two vibration isolators 3 is fixed to first bracket 2e. Specifically, one of two vibration isolators 3 is fitted into protrusion 2e1 of first bracket 2e. The other of two vibration isolators 3 is fixed to second bracket 2f. Specifically, the other of two vibration isolators 3 is fitted into protrusion 2f1 of second bracket 2f.

Vibration isolator 3 is a vibration isolating member that suppresses transmission of vibration caused in motor body 2 to the outside of motor 1. Vibration isolator 3 is a ring-shaped vibration isolating ring. Specifically, vibration isolator 3 as a whole has an annular shape (doughnut shape) having a small thickness along the axis centerline and a width in the radial direction.

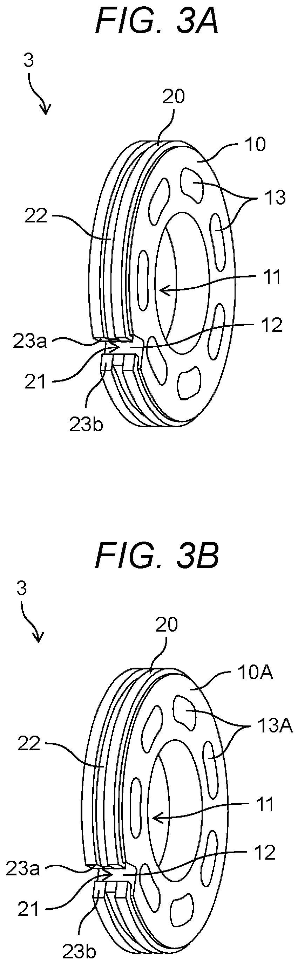

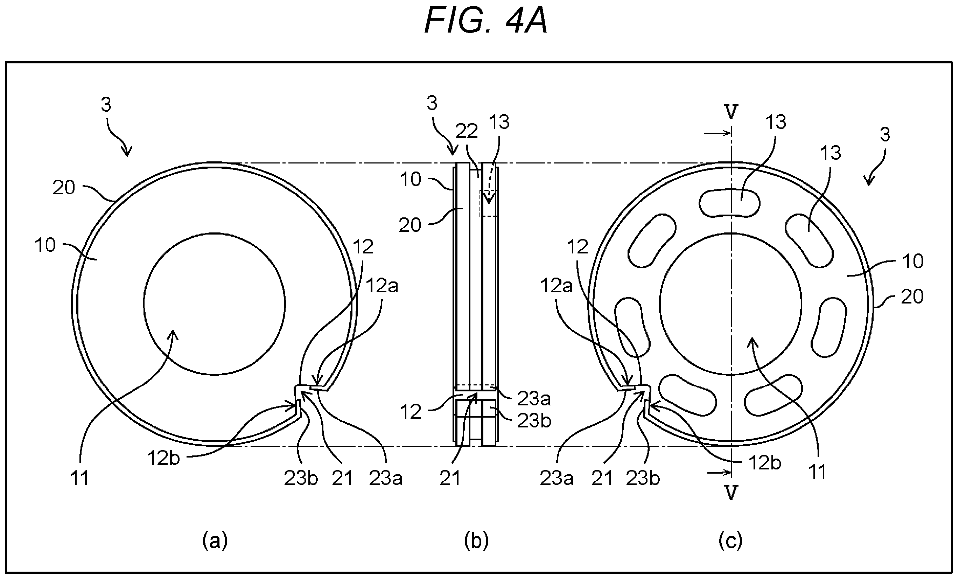

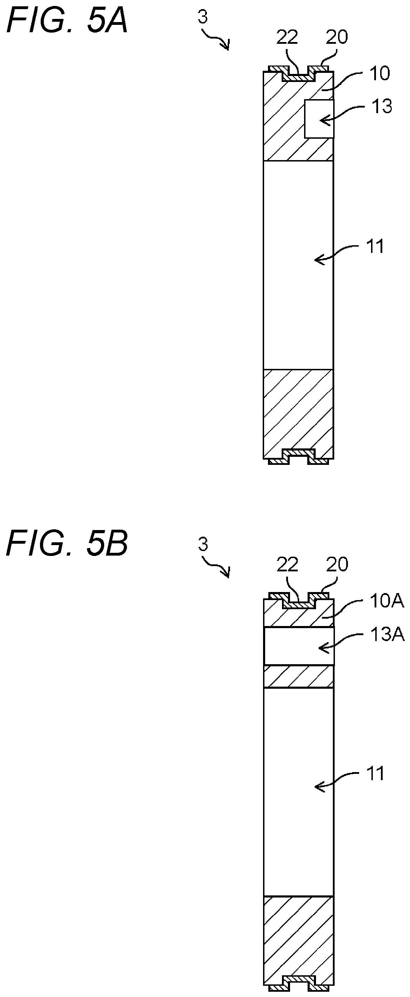

Two vibration isolators 3 attached to motor body 2 have the same configuration. Here, the detailed configuration of vibration isolator 3 will be described with reference to Figs. 3A, 4A, and 5A while referring to Figs. 1 and 2. Fig. 3A is a perspective view of vibration isolator 3 according to the exemplary embodiment. Fig. 4A is a view illustrating a configuration of vibration isolator 3 according to the exemplary embodiment. In Fig. 4A, (a) is a left side view of vibration isolator 3, (b) is a front view of vibration isolator 3, and (c) is a right side view of vibration isolator 3. Fig. 5A is a cross-sectional view of vibration isolator 3 taken along line V-V in (c) of Fig. 4A.

As illustrated in Figs. 3A, 4A, and 5A, vibration isolator 3 includes rubber material 10 that is an elastic body and metal ring 20 that covers an outer peripheral surface of rubber material 10. The center of vibration isolator 3 coincides with the axis centerline of rotating shaft 2a1 of motor 1.

Rubber material 10 is an elastic body (elastic rubber) having an elastic force. That is, rubber material 10 has rubber elasticity. As the material of rubber material 10, an elastomer resin, a silicone resin, or the like can be used.

As elastic bodies other than rubber material 10, resin materials such as polybutylene terephthalate (PBT), foamed materials such as foamed polystyrene, and compressible materials such as wood or paper can be used. When these resin materials, foamed materials, and the like are used, if a fluid such as water or air is sealed inside, elasticity can be further improved.

As illustrated in Fig. 4A, rubber material 10 is ring-shaped. In the present exemplary embodiment, rubber material 10 has an annular shape. Specifically, rubber material 10 as a whole has an annular shape (doughnut shape) having a small thickness and a width in the radial direction. Therefore, opening 11 is formed in the central portion of rubber material 10. As illustrated in Fig. 2, vibration isolator 3 can be attached to first bracket 2e (or second bracket 2f) of motor body 2 by fitting opening 11 into protrusion 2e1 of first bracket 2e (or protrusion 2f1 of second bracket 2f). The planar shape of opening 11 is the same as the top surface shape of protrusion 2e1 of first bracket 2e (or protrusion 2f1 of second bracket 2f). The top surface shape of protrusion 2e1 of first bracket 2e (or protrusion 2f1 of second bracket 2f) is circular. Therefore, the planar shape of opening 11 is circular. The opening diameter of opening 11 of rubber material 10 is the same as or slightly larger than the diameter of protrusion 2el and the diameter of protrusion 2fl. The planar shape of opening 11 is not limited to being circular. The planar shape of opening 11 may be polygonal. The shape of opening 11 of rubber material 10 is preferably a shape that fits with protrusion 2e1 of first bracket 2e and protrusion 2f1 of second bracket 2f.

As illustrated in Figs. 3A and 4A, rubber material 10 has depressed portion 12. Depressed portion 12 is formed by depressing the outer peripheral surface of rubber material 10 at divided portion 21 where a part in the circumferential direction of metal ring 20 is divided. Depressed portion 12 is a cutout portion where rubber material 10 is cut out so that the outer peripheral surface of rubber material 10 is depressed. As illustrated in (a) and (c) of Fig. 4A, a pair of rubber end surfaces 12a, 12b is formed, as exposed surfaces exposed by being cut out, in depressed portion 12 of rubber material 10. The pair of rubber end surfaces 12a, 12b face each other in the circumferential direction of vibration isolator 3.

As illustrated in (a) and (c) of Fig. 4A, depressed portion 12 is formed such that the opening width gradually narrows toward the radially inner side. That is, the interval between the pair of rubber end surfaces 12a gradually decreases toward the radially inner side of rubber material 10. Depressed portion 12 has a shape depressed such that its side view shape is triangular. Therefore, the side view shapes of the pair of rubber end surfaces 12a, 12b are V-shaped. As an example, the side view shape of depressed portion 12 is an isosceles triangle where the bottom of depressed portion 12 forms the apex angle. Therefore, the side surface lengths of the pair of rubber end surfaces 12a, 12b are the same as each other. The angle at the bottom (apex) of depressed portion 12 is an acute angle less than or equal to 90°. However, the present disclosure is not limited thereto.

As illustrated in Figs. 3A, 4A, and 5A, rubber material 10 has a recess 13 (side surface recess) where the side surface of rubber material 10 is depressed. In other words, in rubber material 10, recess 13 depressed from the surface is formed on one surface located along the axis centerline. A plurality of recesses 13 are provided along the circumferential direction. Seven recesses 13 are provided at equal intervals along the circumferential direction. Recesses 13 are provided only on one of the pair of side surfaces of rubber material 10.

Opening 11, depressed portion 12, and recesses 13 may be formed in rubber material 10 by cutting out the central portion and outer peripheral surface of the disk-shaped elastic rubber. However, the present disclosure is not limited thereto. For example, instead of cutting out the thin disk-shaped rubber material, rubber material 10 having opening 11, depressed portion 12, and recesses 13 may be formed by resin molding using a mold. Alternatively, opening 11, depressed portion 12, and recesses 13 may be formed by cutting out a rubber material having a predetermined shape formed by resin molding.

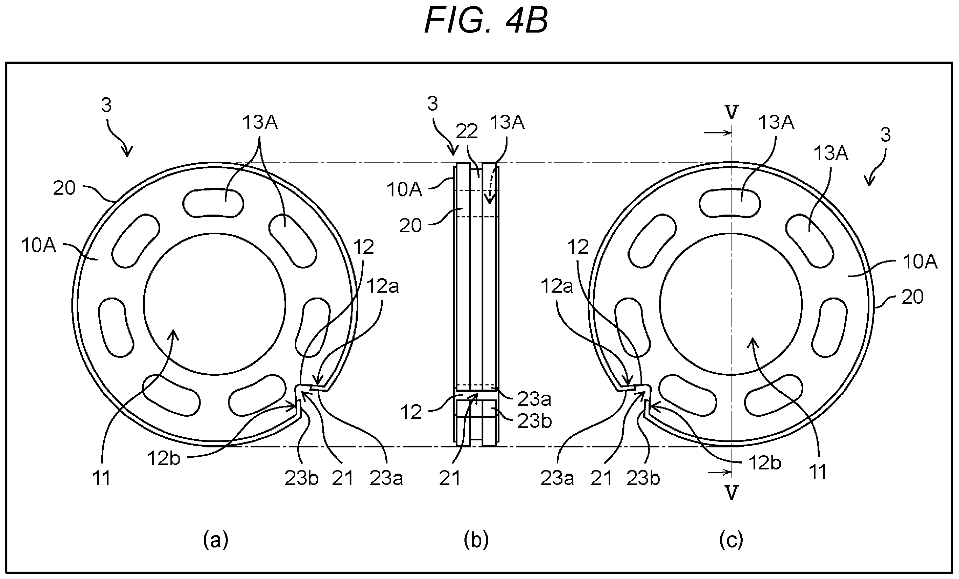

In the rubber material, a hole penetrating from one side surface to the other side surface of the rubber material may be formed. Fig. 3B is a perspective view of another vibration isolator 3 according to the exemplary embodiment. Fig. 4B is a view illustrating a configuration of another vibration isolator 3 according to the exemplary embodiment. Fig. 5B is a cross-sectional view of another vibration isolator 3 according to the exemplary embodiment. Vibration isolator 3 illustrated in Figs. 3B, 4B, and 5B includes rubber material 10A. In rubber material 10A, hole 13A penetrating from one side surface to the other side surface of rubber material 10A is formed. In other words, hole 13A penetrating along the axis centerline is formed in rubber material 10A. A plurality of holes 13A are provided along the circumferential direction. Seven holes 13A are provided at equal intervals along the circumferential direction.

When metal ring 20 to be described later is tightened by forming recesses 13 in rubber material 10 or hole 13A in rubber material 10A as described above, different tightening forces are caused in rubber material 10 and rubber material 10A.

As illustrated in Figs. 3A, 4A, and 5A, metal ring 20 covers the outer peripheral surface of rubber material 10. Metal ring 20 is in contact with the outer peripheral surface of rubber material 10. Metal ring 20 is an outer peripheral ring forming the outer casing of vibration isolator 3.

Metal ring 20 is a ring-shaped loop. As an example, metal ring 20 has an annular shape. For example, metal ring 20 has an annular shape by bending a thin, elongated metal plate. Metal ring 20 can include an iron-based metal material. The metal material constituting metal ring 20 is not limited to an iron-based material.

The width of metal ring 20 is equal to the width of rubber material 10, or smaller than the width of rubber material 10. As an example, the width of metal ring 20 is slightly smaller than the width of rubber material 10, as illustrated in Fig. 5A. The outer peripheral surfaces of both ends in the width direction of rubber material 10 are slightly exposed from metal ring 20.

As illustrated in Figs. 3A and 4A, metal ring 20 has divided portion 21 where a part in the circumferential direction of metal ring 20 is divided. That is, metal ring 20 has a ring shape in which a part in the circumferential direction is discontinuous. A gap exists in the circumferential direction of metal ring 20 due to divided portion 21. That is, divided portion 21 is a slit forming an opening. Divided portion 21 of metal ring 20 exists at a position where depressed portion 12 of rubber material 10 is provided.

As illustrated in Figs. 3A, 4A, and 5A, metal ring 20 has groove 22 formed over the entire circumference in the circumferential direction of metal ring 20. In the present exemplary embodiment, the cross-sectional shape of groove 22 is rectangular, as illustrated in Fig. 5A. Groove 22 is formed by performing press working to produce concave and convex portions on a metal plate that constitutes metal ring 20. Therefore, by forming recessed groove 22 on the metal plate, a convex rib, protruding toward rubber material 10, is formed corresponding to groove 22 on the metal plate, as illustrated in Fig. 5A. The recessed groove is formed on the outer peripheral surface of rubber material 10 by the rib of metal ring 20.

By forming divided portion 21 in metal ring 20, first end 23a and second end 23b are formed at the ends in the circumferential direction of metal ring 20, as illustrated in Figs. 3A and 4A. First end 23a that is one end in the circumferential direction of metal ring 20 is a bent portion bent such that the tip is located inside depressed portion 12 of rubber material 10. Similarly, second end 23b that is the other end in the circumferential direction of metal ring 20 is a bent portion bent such that the tip is located inside depressed portion 12 of rubber material 10. That is, both ends in the circumferential direction of metal ring 20 are bent so as to be located inside depressed portion 12 of rubber material 10.

As illustrated in (a) and (c) of Fig. 4A, first end 23a and second end 23b are bent so as to extend toward the bottom of depressed portion 12 of rubber material 10. The tips of first end 23a and second end 23b are not in contact with each other, and there is a gap between the tip of first end 23a and the tip of second end 23b. That is, the tip of first end 23a and the tip of second end 23b do not reach the bottom portion of depressed portion 12.

First end 23a and second end 23b that are bent cover at least a part of the pair of rubber end surface 12a and rubber end surface 12b. Specifically, first end 23a bent is in surface contact with rubber end surface 12a, and second end 23b bent is in surface contact with rubber end surface 12b.

Metal ring 20 and rubber material 10 are joined in close contact with each other. For example, metal ring 20 and rubber material 10 can be joined by vulcanization bonding. The method for joining metal ring 20 and rubber material 10 is not limited to vulcanization bonding.

As illustrated in Fig. 2, vibration isolator 3 configured as described above can be attached to first bracket 2e of motor body 2 by fitting opening 11 of rubber material 10 into protrusion 2e1 of first bracket 2e. Similarly, vibration isolator 3 can be attached to second bracket 2f of motor body 2 by fitting opening 11 of rubber material 10 into protrusion 2f1 of second bracket 2f. In the manner described above, motor 1 illustrated in Fig. 1 can be obtained.

Motor 1 is used, for example, in a fan motor mounted on an outdoor unit of an air conditioner. When motor 1 is used in the fan motor, a rotary fan is attached to rotating shaft 2a1 of motor 1.

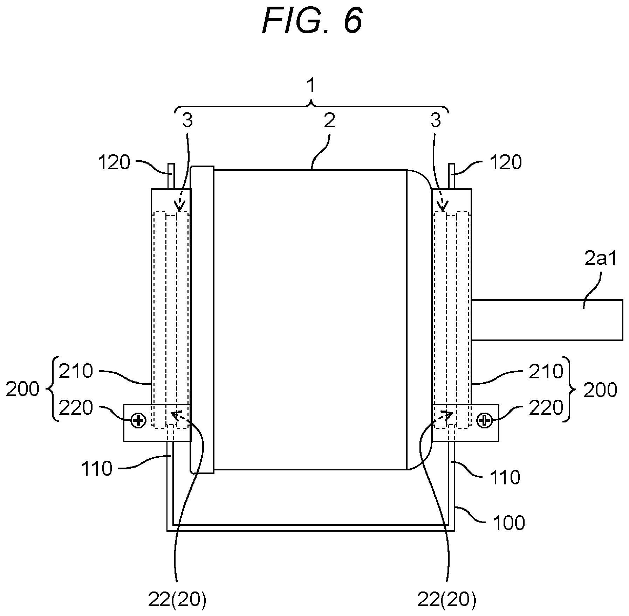

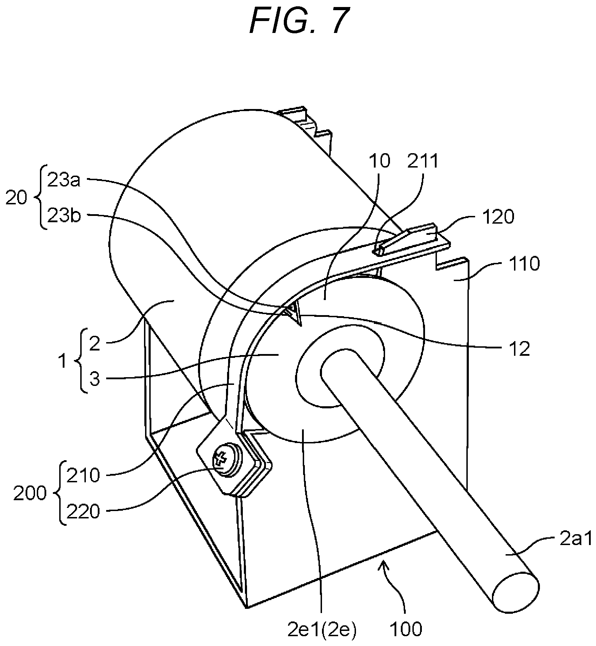

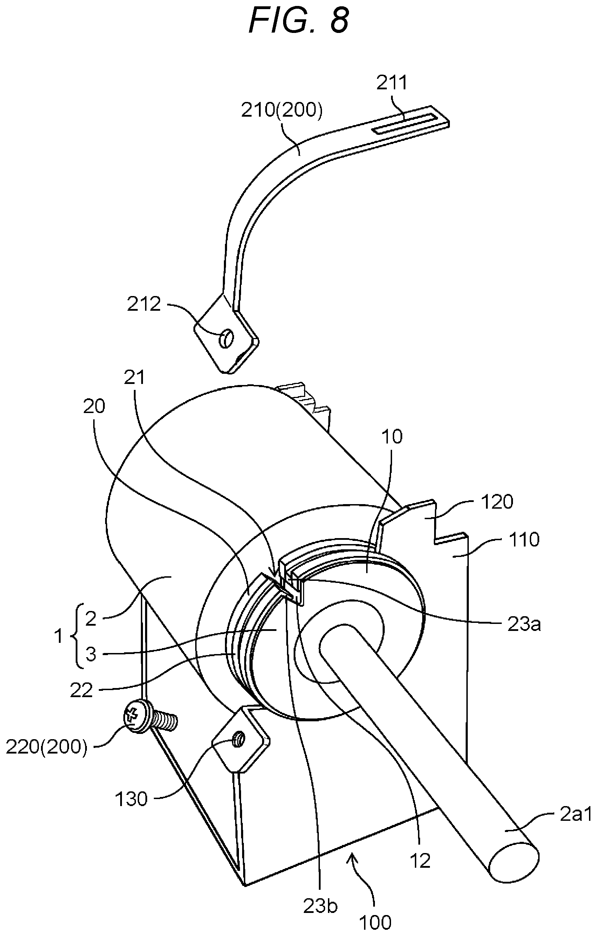

When motor 1 is installed in equipment such as an outdoor unit of an air conditioner, motor 1 is attached to pedestal 100, as illustrated, for example, in Figs. 6, 7, and 8. Fig. 6 is a side view of motor 1 fixed to pedestal 100. Fig. 7 is a perspective view of motor 1 fixed to pedestal 100. Fig. 8 is a perspective view of motor 1 illustrating a state where tightening member 200 is removed from pedestal 100.

As illustrated in Figs. 6 and 7, motor 1 is fixed to pedestal 100 via vibration isolator 3 attached to motor body 2. Two vibration isolators 3 are attached to motor 1. As a result, motor 1 is fixed to pedestal 100 via two vibration isolators 3.

Pedestal 100 is formed in a predetermined shape by, for example, performing press working on a metal plate. Pedestal 100 is bent so as to have a U-shaped cross section. Pedestal 100 has a bottom plate portion and a pair of side plate portions erected from the ends of the bottom plate portion. Pedestal 100 is, for example, a steel plate. However, the present disclosure is not limited thereto.

As illustrated in Figs. 6, 7, and 8, pedestal 100 has motor reception portion 110 as a portion to which motor 1 is attached. Motor reception portion 110 is provided in each of the pair of side plate portions of pedestal 100. Vibration isolator 3 included in motor 1 is placed on motor reception portion 110. Motor reception portion 110 is an edge of the metal plate constituting pedestal 100. Specifically, motor reception portion 110 is an arc edge where a part of the side plate portion of pedestal 100 is cut out in an arc shape. When motor 1 is set on pedestal 100, groove 22 of metal ring 20 of vibration isolator 3 included in motor 1 is fitted into motor reception portion 110, as illustrated in Figs. 6 and 8.

Motor 1 having vibration isolator 3 placed on motor reception portion 110 of pedestal 100 is fixed to pedestal 100 by tightening vibration isolator 3 by tightening member 200. Specifically, metal ring 20 of vibration isolator 3 is tightened by tightening member 200, whereby vibration isolator 3 is compressed and deformed. As a result, motor 1 can be fixed to pedestal 100.

Tightening member 200 includes metal band 210 made of a steel plate and bolt 220. In this case, motor 1 can be fixed to pedestal 100 as follows.

First, motor 1 is set on pedestal 100 such that vibration isolator 3 is placed on motor reception portion 110, as illustrated in Fig. 8. Specifically, groove 22 of metal ring 20 of vibration isolator 3 is fitted into motor reception portion 110 of pedestal 100, whereby motor 1 is set on pedestal 100.

Next, locking hole 211 of metal band 210 illustrated in Fig. 8 is locked to locking piece 120 of pedestal 100, and metal band 210 is put on vibration isolator 3, as illustrated in Fig. 7.

Next, bolt 220 is inserted through screw hole 212 (see Fig. 8) of metal band 210 and screw hole 130 (see Fig. 8) of pedestal 100, and metal band 210 is tightened by bolt 220. As a result, metal ring 20 of vibration isolator 3 is tightened by metal band 210. As a result, metal ring 20 tightens rubber material 10.

When metal ring 20 is tightened by rubber material 10, the opening width between divided portion 21 of metal ring 20 and depressed portion 12 of rubber material 10 narrows depending on the tightening force by metal band 210, as illustrated in Fig. 7. That is, vibration isolator 3 is compressed and deformed in the radial direction. As a result, vibration isolator 3 is compressed and fixed to motor reception portion 110.

In the manner described above, motor 1 can be fixed to pedestal 100 via vibration isolator 3, as illustrated in Figs. 6 and 7. Bolt 220 is a bolt or a screw. When bolt 220 is a bolt, metal band 210 may be tightened by the bolt and a nut.

By fitting groove 22 of metal ring 20 in vibration isolator 3 into motor reception portion 110 of pedestal 100 as described above, motor 1 can be easily positioned with respect to pedestal 100. At this time, simply placing vibration isolator 3 on motor reception portion 110 may cause groove 22 of metal ring 20 in vibration isolator 3 to become misaligned from motor reception portion 110, which may cause motor 1 to fall from pedestal 100. However, when vibration isolator 3 is tightened by tightening member 200 as in the present exemplary embodiment, motor 1 can be reliably fixed to pedestal 100. That is, motor 1 can be prevented from becoming misaligned from motor reception portion 110 and falling from pedestal 100. As described above, motor 1 can be positioned and prevented from falling by using vibration isolator 3 having metal ring 20 where groove 22 is formed.

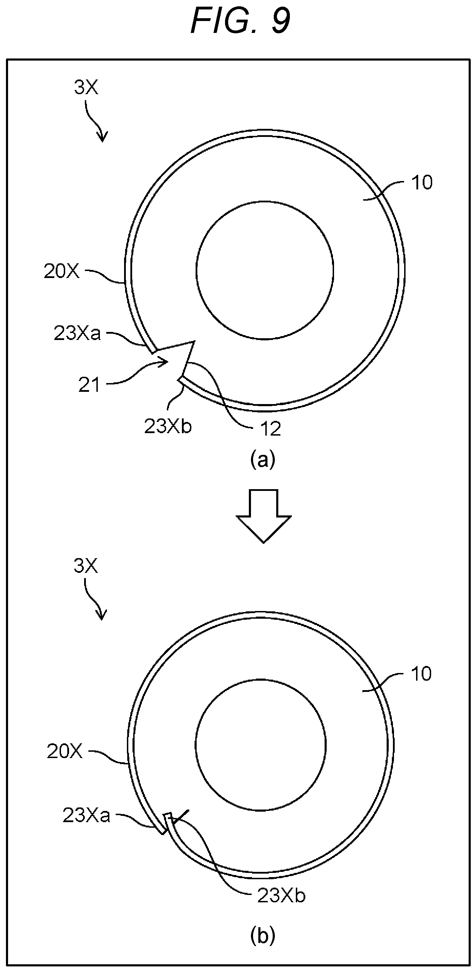

Operation and effects when vibration isolator 3 according to the exemplary embodiment is used will be described in comparison with the case of using vibration isolator 3X of a comparative example illustrated in Fig. 9. Fig. 9 is a view for explaining a state where motor body 2 is fixed to pedestal 100 using vibration isolator 3X of the comparative example.

As illustrated in (a) of Fig. 9, vibration isolator 3X of the comparative example is different from vibration isolator 3 according to the present exemplary embodiment in that both ends in the circumferential direction of metal ring 20X in divided portion 21 are not bent. That is, in vibration isolator 3X of the comparative example, metal ring 20X has groove 22 (not illustrated), similarly to vibration isolator 3 according to the present exemplary embodiment. However, first end 23Xa, which is one end in the circumferential direction of metal ring 20X, and second end 23Xb, which is the other end, are not located inside depressed portion 12 of rubber material 10.

When the motor to which vibration isolator 3X of the comparative example having such a shape is attached is fixed to pedestal 100 illustrated in Figs. 6, 7, and 8 using tightening member 200, groove 22 of metal ring 20X in vibration isolator 3X is fitted into motor reception portion 110 of pedestal 100 and vibration isolator 3X is tightened by tightening member 200, similarly to the case where motor 1 to which vibration isolator 3 according to the present exemplary embodiment is attached is fixed to pedestal 100. As a result, the motor to which vibration isolator 3X is attached can be fixed to pedestal 100.

In this case, when vibration isolator 3X is tightened by tightening member 200, the opening between divided portion 21 of metal ring 20X and depressed portion 12 of rubber material 10 in vibration isolator 3X is closed and disappears, and first end 23Xa and second end 23Xb, which are both ends in the circumferential direction of metal ring 20X, may abut each other.

In this case, the metal plate constituting metal ring 20X is thin, so that first end 23Xa and second end 23Xb of metal ring 20X may become misaligned from each other (slip out of alignment) as illustrated in (b) of Fig. 9. Therefore, first end 23Xa and second end 23Xb may not abut each other. In this case, vibration isolator 3X may be further tightened by tightening member 200. That is, the tightening force applied by tightening member 200 may become so high that vibration isolator 3X is tightened into a state where tightening would otherwise be unnecessary. As a result, when first end 23Xa and second end 23Xb of metal ring 20X are misaligned as illustrated in (b) of Fig. 9, one of first end 23Xa and second end 23Xb (second end 23Xb in (b) of Fig. 9) may press the end surface of depressed portion 12 of rubber material 10, causing one of first end 23Xa and second end 23Xb to stick into rubber material 10.

On the other hand, in vibration isolator 3, the tips of first end 23a and second end 23b, which are both ends in the circumferential direction of metal ring 20, are bent so as to be located inside depressed portion 12 of rubber material 10, as illustrated in Figs. 3A and 4A.

With this configuration, when vibration isolator 3 is tightened by tightening member 200 such that the opening between divided portion 21 of metal ring 20 and depressed portion 12 of rubber material 10 in vibration isolator 3 is closed and rubber end surface 12a and rubber end surface 12b come into contact with each other (when the gap of depressed portion 12 becomes 0), the outer peripheral surface of first end 23a and the outer peripheral surface of second end 23b merely come into contact with each other because first end 23a and second end 23b have bent structures where the tips thereof are located inside depressed portion 12 of rubber material 10, even if first end 23a and second end 23b, which are both ends in the circumferential direction of metal ring 20, become misaligned from each other. That is, one of first end 23a and second end 23b never sticks into rubber material 10. Therefore, it is possible according to vibration isolator 3 to suppress excessive reception of the tightening force.

In the present exemplary embodiment, both first end 23a and second end 23b of metal ring 20 are bent. However, the present disclosure is not limited thereto. Specifically, only one of first end 23a and second end 23b of metal ring 20 may be bent. That is, the tip of only one of first end 23a and second end 23b of metal ring 20 may be bent so as to be located inside depressed portion 12 of rubber material 10.

Even when first end 23a and second end 23b of metal ring 20 have bent structures, there is a risk that, after first end 23a and second end 23b come into contact with each other, first end 23a and second end 23b may become misaligned from each other and slip out of alignment. Therefore, in order that, after first end 23a and second end 23b of metal ring 20 come into contact with each other, first end 23a and second end 23b do not become misaligned from each other and do not slip out of alignment, the lengths of the bent portions of first end 23a and second end 23b are preferably three times or more of the thickness of the metal plate constituting metal ring 20. As a result, it is possible to prevent first end 23a and second end 23b from becoming misaligned from each other and slipping out of alignment. However, the lengths of the bent portions of first end 23a and second end 23b are preferably 1/3 or less of the length of the radius of rubber material 10.

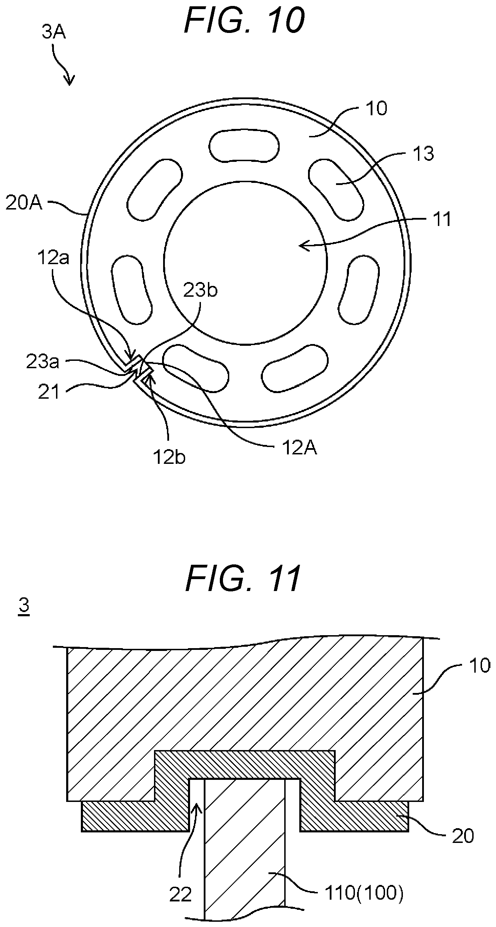

In vibration isolator 3 according to the above exemplary embodiment, the side view shape of depressed portion 12 of rubber material 10 is triangular. However, the present disclosure is not limited thereto. Fig. 10 is a side view of vibration isolator 3A according to Modification 1. The side view shape of depressed portion 12A of rubber material 10 may be, for example, rectangular as in vibration isolator 3A illustrated in Fig. 10. In this case, first end 23a and second end 23b of metal ring 20A become substantially parallel to each other. Although not illustrated, the side view shape of depressed portion 12A of rubber material 10 may be a quadrilateral such as a trapezoid. When the side view shape of depressed portion 12A is trapezoidal, depressed portion 12A is preferably formed such that the opening width gradually narrows toward the radially inner side. As a result, rubber material 10 is easily compressed and deformed in the radial direction when metal ring 20A is tightened by tightening member 200, similarly to the case where the side view shape of depressed portion 12A is triangular.

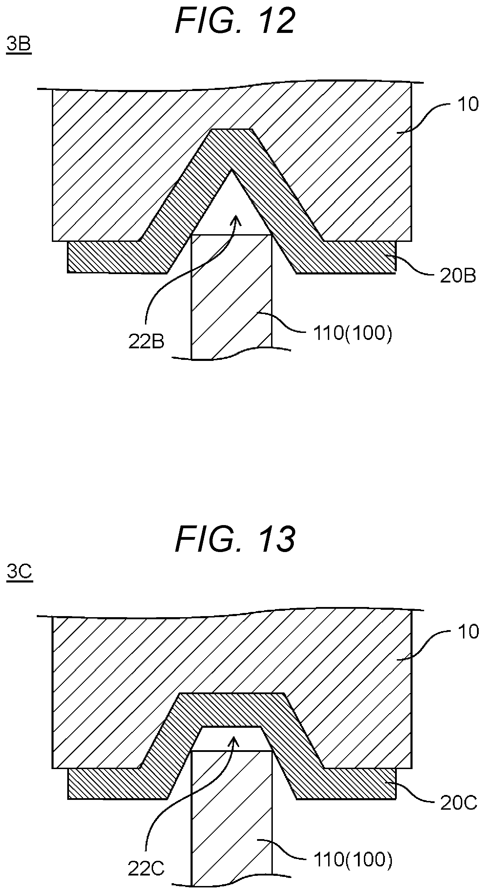

Fig. 11 is an enlarged cross-sectional view of vibration isolator 3 according to the exemplary embodiment. In the above exemplary embodiment, the cross-sectional shape of groove 22 of metal ring 20 in vibration isolator 3 is rectangular as illustrated in Fig. 11. That is, the pair of inner side surfaces of groove 22 is parallel. However, the present disclosure is not limited thereto. Fig. 12 is an enlarged cross-sectional view of vibration isolator 3B according to Modification 2. Specifically, a pair of inner side surfaces of groove 22B of metal ring 20B may be inclined surfaces inclined such that the groove width gradually narrows toward the bottom of groove 22B, as in vibration isolator 3B illustrated in Fig. 12. For example, the cross-sectional shape of groove 22B of metal ring 20B is triangular.

As described above, by making the pair of inner side surfaces of groove 22B inclined surfaces, the edge of motor reception portion 110 of pedestal 100 comes into contact with both of the pair of inner side surfaces of groove 22B. That is, in vibration isolator 3 illustrated in Fig. 11, metal ring 20 and motor reception portion 110 are fixed only by the frictional force between the plane of the bottom of groove 22 and the end surface of motor reception portion 110 and the repulsive force due to the rubber elasticity of rubber material 10. In vibration isolator 3B illustrated in Fig. 12, however, metal ring 20B and motor reception portion 110 are fixed in a state where the pair of inner side surfaces of groove 22B and motor reception portion 110 are in contact with each other. As a result, when vibration isolator 3B is tightened by tightening member 200, vibration isolator 3B can be prevented from becoming misaligned, in the width direction of vibration isolator 3B, from motor reception portion 110. In addition, a contact portion between motor reception portion 110 and groove 22B can be reduced by making the pair of inner side surfaces of groove 22B inclined surfaces. As a result, even if the tightening force applied by tightening member 200 is low, vibration isolator 3B can be stably held by motor reception portion 110. Further, even if there are variations in the shapes of motor reception portion 110 and metal ring 20B, the center of motor reception portion 110 and the center of groove 22B of metal ring 20B do not change. Therefore, the position of motor 1 with respect to pedestal 100 can be easily determined.

Fig. 13 is an enlarged cross-sectional view of vibration isolator 3C according to Modification 3. As in vibration isolator 3C illustrated in Fig. 13, the cross-sectional shape of groove 22C of metal ring 20C may be trapezoidal. Also in this case, a pair of inner side surfaces of groove 22C are inclined surfaces inclined such that the groove width gradually narrows toward the bottom of groove 22C. Therefore, vibration isolator 3C can obtain the same effects as those of vibration isolator 3B illustrated in Fig. 12.

The pair of inner side surfaces of groove 22B of metal ring 20B illustrated in Fig. 12 and the pair of inner side surfaces of groove 22C of metal ring 20C illustrated in Fig. 13 are planar inclined surfaces. However, the present disclosure is not limited thereto. The pairs of inner side surfaces of groove 22B and groove 22C may be, for example, curved inclined surfaces.

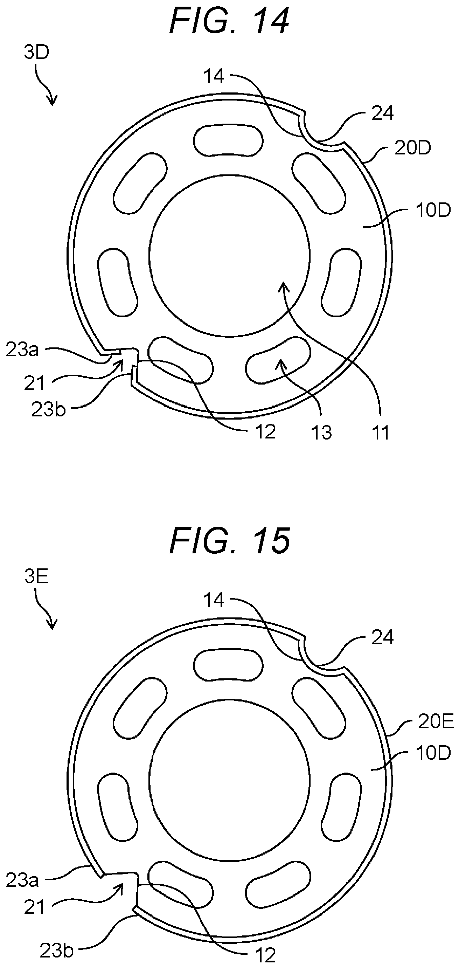

Fig. 14 is a side view of vibration isolator 3D according to Modification 4. As in vibration isolator 3D illustrated in Fig. 14, rubber material 10D may have recess 14 provided at a position facing depressed portion 12 with the center of vibration isolator 3D interposed therebetween. That is, recess 14 is provided at a position located 180° opposite to depressed portion 12. Recess 14 is an outer peripheral surface recess provided on the outer peripheral surface, not the side surface, of rubber material 10D. Recess 14 is a depressed portion where the outer peripheral surface of rubber material 10D is depressed, similarly to the depressed portion 12. The side view shape of the outer peripheral surface of rubber material 10D in recess 14 is arcuate. As an example, the outer peripheral surface of rubber material 10D in recess 14 is a cylindrical surface.

In vibration isolator 3D, metal ring 20D has recess 24 provided at a position facing divided portion 21 with the center of vibration isolator 3D interposed therebetween. That is, recess 24 is provided at a position located 180° opposite to divided portion 21. Recess 24 is a depressed portion where metal ring 20D is depressed. The side view shape of metal ring 20D in recess 24 is arcuate. As an example, the outer peripheral surface of metal ring 20D in recess 24 is a cylindrical surface. Recess 24 of metal ring 20D is fitted into recess 14 of rubber material 10D.

According to vibration isolator 3D configured as described above, the following effects can be obtained in addition to the effects of vibration isolator 3 in the above exemplary embodiment.

If a configuration in which recess 24 is not provided in metal ring 20D of vibration isolator 3D illustrated in Fig. 14 (e.g., the configuration of vibration isolator 3 in the above exemplary embodiment) is adopted, variation occurs in the deformation of metal ring 20D due to a tightening force or the like when vibration isolator 3D is tightened by tightening member 200, which may cause first end 23a and second end 23b of metal ring 20D to become misaligned from each other.

On the other hand, when recess 24 is provided at a position located 180° opposite to divided portion 21 of metal ring 20D as in vibration isolator 3D illustrated in Fig. 14, and vibration isolator 3D is tightened by tightening member 200, metal ring 20D is deformed with recess 24 as a fulcrum (starting point). That is, by providing recess 24, the variation in the starting point when metal ring 20D is deformed can be suppressed. Therefore, when tightened by tightening member 200, vibration isolator 3D is deformed in a uniform manner with recess 24 serving as a specific fulcrum. As a result, metal ring 20D can apply a load stress (tightening force) at a specific position with respect to rubber material 10D. That is, when rubber material 10D is tightened by metal ring 20D, the tightening forces that rubber material 10D receives at at least two positions in the circumferential direction are different. Specifically, metal ring 20D can apply a load stresses in a concentrated manner at two places located ±90° away from divided portion 21. As described above, when rubber material 10D is tightened by metal ring 20D, recess 24 functions as a structure that differentiates the tightening forces that rubber material 10D receives at at least two positions in the circumferential direction. As a result, when vibration isolator 3D is tightened by tightening member 200, first end 23a and second end 23b of metal ring 20D coincide with each other without becoming misaligned. Therefore, it is possible according to vibration isolator 3D to more reliably suppress excessive reception of the tightening force.

In vibration isolator 3D illustrated in Fig. 14, first end 23a and second end 23b of metal ring 20D are bent such that the tips are located inside depressed portion 12 of rubber material 10D. However, the present disclosure is not limited thereto. Fig. 15 is a side view of vibration isolator 3E according to Modification 5. Specifically, as in vibration isolator 3E illustrated in Fig. 15, first end 23a and second end 23b of metal ring 20E may not be bent and metal ring 20E may only be provided with recess 24 at a position located 180° opposite to divided portion 21. Also in vibration isolator 3E illustrated in Fig. 15, metal ring 20E is deformed with recess 24 as a fulcrum (starting point) when vibration isolator 3E is tightened by tightening member 200. Therefore, the variation in the starting point when metal ring 20E is deformed is suppressed, and metal ring 20E can apply a load stress (tightening force) at a specific position with respect to rubber material 10D. As a result, when vibration isolator 3E is tightened by tightening member 200, first end 23a and second end 23b of metal ring 20E coincide with each other without becoming misaligned. Therefore, even with the structure of vibration isolator 3E illustrated in Fig. 15, it is possible to suppress excessive reception of the tightening force.

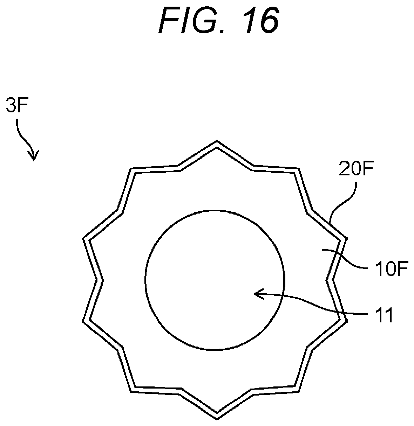

In vibration isolator 3 according to the above exemplary embodiment, metal ring 20 is provided with divided portion 21. However, the present disclosure is not limited thereto. Fig. 16 is a side view of vibration isolator 3F according to Modification 6. Specifically, as in vibration isolator 3F illustrated in Fig. 16, metal ring 20F may have a ring shape continuous over the entire circumference without being divided in the middle. In this case, metal ring 20F preferably has an uneven structure where projections and recesses are repeatedly provided over the entire circumference in the circumferential direction, as illustrated in Fig. 16. Metal ring 20F can be configured to have, for example, a jagged structure where projections and recesses, each having a triangular cross section, are repeatedly provided. The plurality of projections and the plurality of recesses in metal ring 20F are preferably provided at equal intervals along the circumferential direction. It is preferable that six or more projections and six or more recesses are provided in metal ring 20F. In Fig. 16, ten projections and ten recesses are provided in metal ring 20F. The height of the projection and the depth of the recess in metal ring 20F are preferably 2 times or more of the plate thickness of the metal plate constituting metal ring 20F. However, the height of the projection and the depth of the recess in metal ring 20F are preferably 1/3 or less of the radius of rubber material 10F. In vibration isolator 3F, the outer peripheral surface of rubber material 10F is in contact with metal ring 20F, and thus an uneven structure similar to that of metal ring 20F is obtained as illustrated in Fig. 16.

As described above, according to vibration isolator 3F including metal ring 20F having the uneven structure, the following effects can be obtained.

In a case where a motor using a vibration isolator having a continuous, annular metal ring without the divided portion is fixed to pedestal 100, and the vibration isolator is tightened by tightening member 200, the tightening force that the rubber material receives from the metal ring is constant, and the repulsive force of the metal ring due to the tightening force (compressive force) cannot be released.

On the other hand, in a case where a motor using vibration isolator 3F illustrated in Fig. 16 is fixed to pedestal 100, metal ring 20F of vibration isolator 3F has the uneven structure, and thus when vibration isolator 3F is tightened by tightening member 200, the tightening force that rubber material 10F receives from metal ring 20F is not constant, and the repulsive force of metal ring 20F due to the tightening force (compressive force) can be dispersed and released. Specifically, the repulsive force can be uniformly dispersed in correspondence with the number of the projections or recesses in the uneven structure of metal ring 20F. In this case, when rubber material 10F is tightened by metal ring 20F, the tightening forces that rubber material 10F receives at at least two positions in the circumferential direction are different. Specifically, in rubber material 10F, the tightening forces received at the positions of the projections and the recesses in the uneven structure of metal ring 20F are different, and the load stress can be dispersed in correspondence with the number of the projections or recesses in the uneven structure, the dispersed load stress being able to be applied to rubber material 10F. As described above, the uneven structure of metal ring 20F functions as a structure that, when rubber material 10F is tightened by metal ring 20F, differentiates the tightening forces that rubber material 10F receives at at least at two positions in the circumferential direction. As a result, vibration isolator 3F can suppress excessive reception of the tightening force.

From the viewpoint of a vibration isolation effect that prevents transmission of vibrations from the motor body to the outside, it is preferable that rubber material 10F of vibration isolator 3F has a lower hardness. However, when the tightening force to be applied by tightening member 200 is increased such that the motor does not fall, rubber material 10F is compressed and deformed, and rubber material 10F becomes dense. Therefore, the apparent hardness of rubber material 10F increases, which may cause the vibration isolation effect to be deteriorated. In this regard, in a vibration isolator including a metal ring in which the divided portion is formed, a portion where the rubber material is dense (portion where the hardness is high) may concentrate on a part over the entire 360° circumferential direction due to the tightening by tightening member 200. According to vibration isolator 3F illustrated in Fig. 16, however, metal ring 20F is continuously ring-shaped without a divided portion, and has an uneven structure, so that the repulsive force of metal ring 20F due to the tightening force applied by tightening member 200 can be dispersed and released. As a result, even if the tightening force applied by tightening member 200 increases, the density of rubber material 10F can be made uniform over the entire 360° circumferential direction, and it is possible to suppress occurrence of a portion where a part of rubber material 10F is dense. As a result, a stable vibration isolation effect can be obtained by vibration isolator 3F.

### (Modifications)

The vibration isolator, the motor, and the like according to the present disclosure have been described above based on the exemplary embodiments. However, the present disclosure is not limited to the above exemplary embodiments.

For example, in vibration isolator 3 in the above exemplary embodiment, depressed portion 12 is provided in rubber material 10. However, the present disclosure is not limited thereto. That is, rubber material 10 of vibration isolator 3 may have a completely circular outer peripheral surface, not being provided with depressed portion 12.

In the exemplary embodiment described above, motor body 2 is a molded motor. However, the present disclosure is not limited thereto. In this case, one of first bracket 2e and second bracket 2f may be a closed-end cylindrical case, and the other of first bracket 2e and second bracket 2f may be a lid body that covers the opening of the case.

In the exemplary embodiment described above, motor body 2 is a brushless motor that does not use a brush. However, the present disclosure is not limited thereto. For example, motor body 2 may be a commutator motor using a brush and a commutator.

In the exemplary embodiment described above, motor 1 is used as a fan motor of an air conditioner, but the present disclosure is not limited thereto. Motor 1 of the present disclosure may be used in equipment other than an air conditioner, or may be used as a motor other than the fan motor.

In addition, the present disclosure also includes a mode obtained by applying various modifications conceived by those skilled in the art to each of the above exemplary embodiments and modifications, or a mode realized by arbitrarily combining constituent elements and functions in the above exemplary embodiments without departing from the gist of the present disclosure. The present disclosure also includes any combination of two or more claims within a scope not technically contradictory among a plurality of claims described in the claims at the time of filing of the present application. For example, when a claim in the cited form described in the claims at the time of filing of the present application is defined as a multiple dependent claim or a multiple-multiple dependent that refers to all preceding claims within a scope not technically contradictory, all combinations of the claims included in the multiple dependent claim or the multiple-multiple dependent claim are also included in the present disclosure.

### INDUSTRIAL APPLICABILITY

The technology of the present disclosure can be widely used for various equipment on which motors are mounted.

### REFERENCE MARKS IN THE DRAWINGS

1: motor
2: motor body
2a: rotor
2a1: rotating shaft
2b: stator
2c: first bearing
2d: second bearing
2e: first bracket
2e1: protrusion
2f: second bracket
2f1: protrusion
2g: molding resin
3, 3A, 3B, 3C, 3D, 3E, 3F: vibration isolator
10, 10A, 10D, 10F: rubber material (elastic body)
11: opening
12, 12A: depressed portion
12a, 12b: rubber end surface
13, 14: recess
13A: hole
20, 20A, 20B, 20C, 20D, 20E, 20F: metal ring
21: divided portion
22, 22B, 22C: groove
23a: first end
23b: second end
24: recess
100: pedestal
110: motor reception portion
120: locking piece
130: screw hole
200: tightening member
210: metal band
211: locking hole
212: screw hole
220: bolt

## Claims

1. A vibration isolator comprising:
an elastic body that is ring-shaped; and
a metal ring that covers an outer peripheral surface of the elastic body, wherein
the metal ring has a divided portion where a part in a circumferential direction of the metal ring is divided,
the elastic body has a depressed portion where the outer peripheral surface is depressed in the divided portion, and
a first end that is one end in the circumferential direction of the metal ring is bent and a tip is located inside the depressed portion.

2. The vibration isolator according to Claim 1, wherein
a second end that is the other end in the circumferential direction of the metal ring is bent and a tip is located inside the depressed portion.

3. A vibration isolator comprising:
an elastic body that is ring-shaped; and
a metal ring that covers an outer peripheral surface of the elastic body, wherein
the vibration isolator has a structure that, when the elastic body is tightened by the metal ring, differentiates tightening forces that the elastic body receives at two positions in a circumferential direction.

4. The vibration isolator according to Claim 3, wherein
the metal ring has a divided portion where a part in the circumferential direction of the metal ring is divided,
the elastic body has a depressed portion where the outer peripheral surface is depressed in the divided portion, and
the metal ring has, as the structure, a recess provided at a position facing the divided portion with a center of the vibration isolator interposed therebetween.

5. The vibration isolator according to Claim 3, wherein
the metal ring has a divided portion where a part in the circumferential direction of the metal ring is divided,
the elastic body has a depressed portion where the outer peripheral surface is depressed in the divided portion, and
the elastic body has, as the structure, a plurality of holes formed in an axial direction forming a center of the circumferential direction, over a ring-shaped direction formed by the elastic body along the circumferential direction.

6. The vibration isolator according to Claim 3, wherein
the metal ring has, as the structure, an uneven structure where projections and recesses are repeatedly provided over an entire circumference in the circumferential direction.

7. The vibration isolator according to any one of Claims 1 to 6, wherein
the metal ring has a groove formed over the entire circumference in the circumferential direction, and
inner side surfaces of the groove are inclined surfaces and a groove width gradually narrows toward a bottom of the groove.

8. A motor comprising:
the vibration isolator according to any one of Claims 1 to 7;
a rotor having a rotating shaft; and
a bracket having a protrusion where a bearing that supports the rotating shaft is housed, wherein
the vibration isolator is fitted into the protrusion.
